(19) Europäisches Patentamt
European Patent Office
Office européen des brevets

(11) **EP 4 410 410 A1**

(12) **EUROPEAN PATENT APPLICATION**
published in accordance with Art. 153(4) EPC

(43) Date of publication:
**07.08.2024 Bulletin 2024/32**

(21) Application number: **22898754.1**

(22) Date of filing: **25.07.2022**

(51) International Patent Classification (IPC):
**B01D 67/00** (2006.01) **B01D 71/26** (2006.01)
**H01M 50/403** (2021.01) **H01M 50/417** (2021.01)

(52) Cooperative Patent Classification (CPC):
**B01D 67/00; B01D 71/26; H01M 50/403;
H01M 50/417; Y02E 60/10**

(86) International application number:
**PCT/KR2022/010884**

(87) International publication number:
**WO 2023/096069 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.11.2021 KR 20210165978**

(71) Applicants:
• **W-Scope Korea Co., Ltd.
Cheongju-si, Chungcheongbuk-do 28122 (KR)**
• **W-Scope Chungju Plant Co., Ltd.
Daesowon-myeon
Chungju-si, Chungcheongbuk-do
27461 (KR)**

(72) Inventors:
• **RYU, Kyoung Sun
Cheongju-si, Chungcheongbuk-do 28113 (KR)**
• **KIM, Hyun Joo
Cheongju-si, Chungcheongbuk-do 28121 (KR)**
• **JEONG, Jin Hyun
Cheongju-si, Chungcheongbuk-do 28121 (KR)**
• **KIM, Byung Hyun
Cheongju-si Chungcheongbuk-do 28121 (KR)**
• **LEE, Bom Yi
Pyeongtaek-si, Gyeonggi-do 17883 (KR)**

(74) Representative: **BCKIP Part mbB
Siegfriedstraße 8
80803 München (DE)**

(54) **SEPARATOR AND MANUFACTURING METHOD THEREFOR**

(57)    The present invention provides a separator that is formed of a porous film that has a hydrophobic region containing a polyolefin, and a hydrophilic region containing a hydrophilic polymer dispersed in the hydrophobic region, wherein the content of the hydrophilic region in the porous film is 0.1 to 7.5 wt%, and a method of manufacturing the same.

EP 4 410 410 A1

## Description

[Technical Field]

The present invention relates to a separator and a method of manufacturing the same, and more particularly, to a separator for a lithium secondary battery having improved electrolyte impregnability, and a method of manufacturing the same.

[Background Art]

Lithium secondary batteries are widely used as a power source for various types of electrical products miniaturization and a light weight, such as smartphones, notebooks, tablets, PCs, etc., and as the application area expands to smart grids and medium-to-large batteries for electric vehicles, the development of a lithium secondary battery with large capacity, a long lifespan, and high stability is required.

As a mean for achieving the above purpose, research and development is being actively conducted on separators in which micropores that separate a positive electrode and a negative electrode to prevent an internal short and facilitate the movement of lithium ions during charging/discharging are formed, and particularly, microporous separators using polyolefin such as polyethylene that is advantageous for forming pores by thermally induced phase separation, economical, and easily satisfying the physical properties required for separators.

Polyolefin-based separators, which have been widely used conventionally, have problems such as poor heat resistance and mechanical strength, and to compensate for these problems, a technology of coating the surface of a separator with a heat-resistant layer containing ceramic particles has been proposed. However, the heat-resistant layer leaves significant technical challenges related to air permeability and conductivity (resistance), which are factors having a very important influence on the performance of a separator. That is, when a heat-resistant layer including ceramic particles is formed on the surface of a porous substrate, the heat resistance of a separator is improved, but the ceramic particles included in the heat-resistant layer block the pores formed in the porous substrate, thereby reducing the air permeability of the separator. Accordingly, the ion movement path between the positive electrode and the negative electrode is greatly reduced, resulting in a significant decrease in the charging and discharging performance of a secondary battery. In addition, as the heat-resistant layer is continuously exposed to an electrolyte in the battery, ceramic particles may be partially and continuously released from the porous substrate, and in this case, the heat resistance of the separator may gradually decrease.

Meanwhile, a lithium secondary battery is formed in a structure in which a nonaqueous electrolyte containing a lithium salt is impregnated in an electrode assembly with a porous separator between a positive electrode and a negative electrode, each of which has an active material applied on an electrode current collector.

A lithium secondary battery is manufactured by manufacturing an electrode assembly having a structure in which a positive electrode and a negative electrode are alternately stacked, and a separator is interposed between the positive electrode and the negative electrode, inserting the electrode assembly into a battery case formed in a can or pouch with a certain size and shape, and finally injecting an electrolyte. Here, the electrolyte permeates between the positive electrode, the negative electrode, and the separator by a capillary force. However, due to the nature of the materials, since the positive electrode, the negative electrode, and the separator are hydrophobic, whereas the electrolyte is hydrophilic, to improve the impregnation of an electrolyte or wettability of the electrodes and the separator, a considerable amount of time and difficult process conditions are required, and thus there are limitations in achieving and improving the impregnation of the electrolyte and the productivity of the process in a balanced manner.

To improve the impregnation of the electrolyte, a method such as injecting the electrolyte at a high temperature or injecting the electrolyte under increased or reduced pressure is used, but conventional electrode assembly and electrolyte are deformed by heat, causing an internal short. In addition, since the above process is performed after accommodating the electrode assembly, along with the electrolyte, in a battery case, the impregnation of the electrolyte in the electrode assembly may occur non-uniformly, and particularly, in a j elly-roll type electrode assembly, there is a problem that the lifespan of the battery is shortened due to the non-uniformity of impregnation between a winding center and the outer part.

[Disclosure]

[Technical Problem]

To solve the above-described problems of the related art, the present invention is directed to providing a separator that can achieve mechanical properties, appearance properties, electrolyte impregnability, and process productivity in a balanced manner, and a method of manufacturing the same.

[Technical Solution]

One aspect of the present invention provides a separator, which is formed of a porous film that has a hydrophobic region containing a polyolefin, and a hydrophilic region containing a hydrophilic polymer dispersed in the hydrophobic region, and the content of the hydrophilic region in the porous film is 0.1 to 7.5 wt%.

In one embodiment, the polyolefin may have a weight average molecular weight of 200,000 to 800,000.

In one embodiment, the ratio of the content of the hydrophilic region to the weight average molecular weight of the polyolefin may be $0.1*10^{-5}$ to $1.1*10^{-5}$.

In one embodiment, the weight average molecular weight of the polyolefin may be 900,000 to 2,000,000.

In one embodiment, the ratio of the content of the hydrophilic region to the weight average molecular weight of the polyolefin may be $0.1*10^{-5}$ to $0.75*10^{-5}$.

In one embodiment, the polyolefin may include one selected from the group consisting of polyethylene, polypropylene, polybutylene, polymethylpentene, and a combination of two or more thereof.

In one embodiment, the hydrophilic polymer may be one selected from the group consisting of ethylene vinyl acetate, ethylene vinyl alcohol, polyvinyl alcohol, polyacrylic acid, a polyoxyethylene-polyoxypropylene block copolymer, polyethylene glycol, polyethylene oxide, polyvinyl pyrrolidone, polyvinyl acetal, polyvinyl butyral, a cellulose derivative, glycerol, and a combination of two or more thereof.

In one embodiment, from immediately after the addition of droplets of an electrolyte on the surface of the separator until 5 minutes have elapsed, the rate of change in machine direction (MD) length may be 15 to 50%, and the rate of change in transverse direction (TD) length may be 15 to 40%.

In one embodiment, the number of surface detects that are present on the surface of the separator, have a brightness, which differs from the surroundings, and have a size of 2 mm or more may be $10/m^2$ or less.

In another aspect of the present invention, a method of manufacturing a separator, which includes (a) inputting a composition including a polyolefin, a hydrophilic polymer, and a pore-forming agent to an extruder and forming a base sheet; (b) manufacturing a base film by stretching the base sheet and then extracting the pore-forming agent; and (c) heat-setting the base film, is provided.

[Advantageous Effects]

A separator according to one aspect of the present invention is formed of a porous film that has a hydrophobic region containing a polyolefin and a hydrophilic region containing a hydrophilic polymer dispersed in the hydrophobic region, and by adjusting the content of the hydrophilic region of the porous film to 0.1 to 7.5wt%, mechanical properties, appearance properties, electrode impregnability, and process productivity can be realized in a balanced manner.

It should be understood that the effects of the present invention are not limited to the above-described effects and include all effects that can be deduced from the configuration of the present invention described in the detailed description or claims of the present invention.

[Modes of the Invention]

Hereinafter, the present invention will be described in detail. However, the present invention may be implemented in a variety of different forms and is not limited to the embodiments described herein.

Throughout the specification, when a part is "connected" to another part, it means that the one part is "directly connected," or "indirectly connected" with a third member therebetween. In addition, when a certain part "includes" a certain component, it means that, unless particularly stated otherwise, another component may be further included rather than excluded.

A separator according to one aspect of the present invention may be formed of a porous film that has a hydrophobic region containing a polyolefin and a hydrophilic region containing a hydrophilic polymer dispersed in the hydrophobic region, and the content of the hydrophilic region in the porous film is 0.1 to 7.5 wt%.

In the separator, the hydrophobic region and the hydrophilic region may constitute a continuous phase and a discontinuous phase, respectively. In the separator, the hydrophilic region may be uniformly dispersed in a matrix composed of the hydrophobic region to impart substantially uniform hydrophilicity to the entire region along the area and/or thickness direction(s) of the separator, and thus the electrode impregnability of the separator may be improved.

The term "matrix" used herein refers to a component that constitutes a continuous phase in a separator containing two or more components. That is, in the separator, the hydrophobic region containing the polyolefin is present in the form of a continuous phase and the hydrophilic region containing the hydrophilic polymer may be dispersed in the form of a discontinuous phase in the hydrophobic region.

The content of the hydrophilic region in the porous film may be 0.1 to 7.5 wt%, preferably 1 to 6 wt%, and more preferably 3 to 6 wt%. When the content of the hydrophilic region is less than 0.1 wt%, it is not possible to achieve the required level of electrolyte impregnability, and when the content of the hydrophilic region is more than 7.5 wt%, while it is possible to further improve the electrolyte impregnation, the mechanical properties and heat resistance of the separator that can be implemented by the polyolefin may be degraded. In addition, when the content of the hydrophilic region is more than 7.5 wt%, as the dispersity of the hydrophilic polymer may be degraded, the number of surface defects with a brightness, which differs from the surroundings, and a size of 2 mm or more, increases on the surface of the separator, which degrades appearance quality, and resistance may rapidly change at a site and/or in a region where the hydrophilic polymer may randomly aggregate on the surface and/or inside of the separator, which adversely affects the electrochemical properties of a battery.

The polyolefin may include one selected from the group consisting of polyethylene, polypropylene, polybutylene, polymethylpentene, and a combination of two or more thereof, preferably at least one of polyethylene and polypropylene, and more preferably polyethylene, but the present invention is not limited thereto.

A conventional separator consisting of only polyolefin is inherently hydrophobic, but a certain amount of hydrophilicity may be imparted to the separator by melting and kneading a polyolefin and a certain amount of hydrophilic polymer in the manufacture of the separator. In this case, as the molecular weight of the polyolefin and the content of the hydrophilic polymer in the separator are derived and combined as variables for optimizing and implementing the required level of electrolyte impregnability, the productivity of the process of melting and kneading the hydrophobic polymer with the polyolefin, the hydrophilicity of the separator, and the resulting electrolyte impregnation may be realized in a balanced manner.

First, when the polyolefin is high density polyethylene (HDPE), the weight average molecular weight of the polyethylene may be 200,000 to 800,000, preferably 250,000 to 600,000, and more preferably 300,000 to 500,000, and the ratio of the content of the hydrophilic region to the weight average molecular weight of HDPE may be $0.1*10^{-5}$ to $1.1*10^{-5}$, preferably $0.2*10^{-5}$ to $1*10^{-5}$, and more preferably $0.5*10^{-5}$ to $1*10^{-5}$.

When the ratio of the content of the hydrophilic region to the weight average molecular weight of the HDPE is less than $0.1 * 10^{-5}$, it is not possible to achieve the required level of electrolyte impregnability, and when the ratio of the content of the hydrophilic region to the weight average molecular weight of the HDPE is more than $1.1 * 10^{-5}$, not only may electrolyte impregnability be degraded, but also the mechanical properties and heat resistance of the separator that can be implemented by HDPE may be degraded. In addition, when the ratio of the content of the hydrophilic region to the weight average molecular weight of the HDPE is more than $1.1*10^{-5}$, as the dispersity of the hydrophilic polymer is degraded, the number of surface defects with a brightness, which differs from the surroundings, and a size of 2 mm or more, increases on the surface of the separator, which degrades appearance quality, and resistance may rapidly change at a site and/or in a region where the hydrophilic polymer may randomly aggregate on the surface and/or inside of the separator, which adversely affects the electrochemical properties of a battery.

Meanwhile, when the polyolefin is ultra high molecular weight polyethylene (UHMWPE), the weight average molecular weight of the polyethylene may be 900,000 to 2,000,000, and preferably 1,000,000 to 1,500,000, and the ratio of the content of the hydrophilic region to the weight average molecular weight of the UHMWPE may be $0.1*10^{-5}$ to $0.75*10^{-5}$, preferably $0.15*10^{-5}$ to $0.6*10^{-5}$, and more preferably $0.3*10^{-5}$ to $0.6*10^{-5}$.

When the ratio of the content of the hydrophilic region to the weight average molecular weight of the UHMWPE is less than $0.1*10^{-5}$, it is not possible to achieve the required level of electrolyte impregnability, and when the ratio of the content of the hydrophilic region to the weight average molecular weight of the UHMWPE is more than $0.75* 10^{-5}$, not only may electrolyte impregnability be degraded, but also the mechanical properties and heat resistance of the separator that can be implemented by UHMWPE may be degraded. In addition, when the ratio of the content of the hydrophilic region to the weight average molecular weight of the UHMWPE is more than $0.75* 10^{-5}$, as the dispersity of the hydrophilic polymer is degraded, the number of surface defects with a brightness, which differs from the surroundings, and a size of 2 mm or more increases on the surface of the separator, which degrades appearance quality, and resistance may rapidly change at a site and/or in a region where the hydrophilic polymer may randomly aggregate on the surface and/or inside of the separator, which adversely affects the electrochemical properties of a battery.

The hydrophilic polymer may be one selected from the group consisting of ethylene vinyl acetate, ethylene vinyl alcohol, polyvinyl alcohol, polyacrylic acid, a polyoxyethylene-polyoxypropylene block copolymer, polyethylene glycol, polyethylene oxide, polyvinyl pyrrolidone, polyvinyl acetal, polyvinyl butyral, a cellulose derivative, glycerol, and a combination of two or more thereof, preferably ethylene vinyl acetate, and more preferably ethylene vinyl acetate in which the content of vinyl acetate is 15 to 30 wt%, but the present invention is not limited thereto. When the content of vinyl acetate in the ethylene vinyl acetate is less than 15 wt%, the mechanical properties and hydrophilicity of the separator may be degraded, and when the content of vinyl acetate in the ethylene vinyl acetate is more than 30 wt%, processibility and thus dispersity of the hydrophilic polymer may be degraded. Meanwhile, as the hydrophilic polymer, in addition to those described above, various types of polymers having hydrophilic functional groups, such as an amine group, an amide group, a hydroxyl group, and a carboxyl group, in the main chain and/or the side chains may be applied.

From immediately after the addition of droplets of an electrolyte on the surface of the separator until 5 minutes have elapsed, the rate of change in machine direction (MD) length may be 15 to 50%, and preferably 20 to 45%, and the rate of change in transverse direction (TD) length may be 15 to 40%, and preferably 20 to 30%.

When the longest lengths in the machine direction (MD) and the transverse direction (TD) immediately after the addition of droplets of the electrolyte on the surface of the separator are MD1 and TD1, and when the longest lengths in the machine direction (MD) and the transverse direction (TD) after 5 minutes have elapsed are MD2 and TD2, the length change rates may be calculated by Equations 1 and 2 below.

<Equation 1>

$$\text{Rate (\%) of change in machine direction (MD) length} = (MD2-MD1)/(MD1)*100$$

<Equation 2>

$$\text{Rate (\%) of change in transverse direction (TD) length} = (TD2-TD1)/(TD1)*100$$

The electrolyte may be one selected from the group consisting of ethylene carbonate (EC), propylene carbonate (PC), diethyl carbonate (DEC), dimethyl carbonate (DMC), ethyl methyl carbonate (EMC), and a combination of two or more thereof, and preferably a mixture in which ethylene carbonate (EC), diethyl carbonate (DEC), and dimethyl carbonate (DMC) are mixed in a predetermined ratio, but the present invention is not limited thereto.

In the case in which the electrolyte is a mixed electrolyte (EC : DEC : DMC = 2 : 2 : 1(v/v)) of ethylene carbonate (EC), diethyl carbonate (DEC), and dimethyl carbonate (DMC), wherein the $LiPF_6$ concentration is 1.5M and the vinyl carbonate (VC) content is 1.5 wt%, when the rates of change in machine direction (MD) and transverse direction (TD) lengths are outside the above ranges, it may be assessed as not being able to achieve the required level of electrolyte impregnability.

When the polyolefin is HDPE and the ratio of the content of the hydrophilic region to the weight average molecular weight of the HDPE is $0.1*10^{-5}$ to $1.1*10^{-5}$, the ratio of the machine direction (MD) length change rate to the transverse direction (TD) length change rate of the electrolyte droplets may be 0.9 to 1.06, and preferably 1 to 1.04.

In addition, when the polyolefin is UHMWPE and the ratio of the content of the hydrophilic region to the weight average molecular weight of the UHMWPE is $0.1*10^{-5}$ to $0.75*10^{-5}$, the ratio of the machine direction (MD) length change rate to the transverse direction (TD) length change rate of the electrolyte droplets may be 0.9 to 1.8, and preferably 1 to 1.7.

When the ratio of the machine direction (MD) length change rate to the transverse direction (TD) length change rate of the electrolyte droplets is outside the above ranges, the electrolyte impregnation in the separator may occur non-uniformly depending on the direction, which may degrade the electrochemical properties of a battery.

The number of surface defects (white dots and/or black dots), which are present on the surface of the separator, have a brightness that differs from the surroundings, and have a size of 2 mm or more, may be $10/m^2$, preferably $8/m^2$, and more preferably $6/m^2$ or less. When the number of surface defects is more than $10/m^2$, appearance quality may be degraded, and resistance may rapidly change at a site and/or in a region where the polyolefin and/or the hydrophilic polymer randomly aggregate on the surface of the separator, which adversely affects the electrochemical properties of a battery.

The separator may be manufactured by a method that includes (a) inputting a composition including a polyolefin, a hydrophilic polymer, and a pore-forming agent to an extruder and forming a base sheet; (b) manufacturing a base film by stretching the base sheet and then extracting the pore-forming agent; and (c) heat-setting the base film.

In (a), a composition containing 20 to 40 wt% of the polyolefin, 0.1 to 5 wt% of the hydrophilic polymer, and the remainder as a pore-forming agent may be put into an extruder, and a base sheet may be formed. The types, physical properties, and effects, etc. of the polyolefin and the hydrophilic polymer are the same as described above. The input amounts of the polyolefin and the hydrophilic polymer may be adjusted so that the content of the hydrophilic region containing the hydrophilic polymer in the separator is 0.1 to 7.5 wt%.

The pore-forming agent may be one selected from the group consisting of paraffin oil, paraffin wax, mineral oil, solid paraffin, soybean oil, rapeseed oil, palm oil, coconut oil, di-2-ethylhexylphthalate, dibutyl phthalate, diisononyl phthalate, diisodecyl phthalate, bis(2-propylheptyl)phthalate, naphthene oil, and a combination of two or more thereof, preferably paraffin oil, and more preferably paraffin oil with a kinematic viscosity at 40 °C of 50 to 100 cSt, but the present invention is not limited thereto.

In (b), after stretching the base sheet, a base film may be manufactured by extracting the pore-forming agent. The stretching may be performed by a known method such as uniaxial stretching or biaxial stretching (sequential or simultaneous biaxial stretching). For sequential biaxial stretching, a stretching ratio may be 4 to 20 times in the machine direction (MD) and the transverse direction (TD), and a surface magnification corresponding thereto may be 16 to 400 times.

In (c), the base film may be heat-set. Heat setting fixes the film and applies heat to forcibly hold the film that is about to shrink and remove residual stress. A high heat setting temperature is advantageous for lowering the shrinkage rate, but when the temperature is excessively high, the film may partially melt and close the formed pores, reducing permeability. A heat setting temperature is preferably selected in the range in which 10 to 30 wt% of the crystalline part of the base film melts. When the heat setting temperature is selected in the above range, it is possible to prevent the problem of not removing residual stress from the film due to insufficient rearrangement of polyolefin molecules in the base film, and the problem of degrading permeability due to pores being closed by partial melting. For example, a heat setting temperature may be 120 to 150 °C, and preferably 130 to 145 °C, and a heat setting time may be 5 seconds to 10 minutes, and preferably 10 seconds to 1 minute.

Hereinafter, examples of the present invention will be described in detail.

Example 1-1

31.5 parts by weight of polyethylene (PE1, V600, HTC) having a weight average molecular weight (Mw) of 600,000, 0.5 parts by weight of ethylene vinyl acetate (EVA, HTC) having a vinyl acetate content of 28 wt%, and 68 parts by weight of paraffin oil having a kinematic viscosity at 40 °C of 70 cSt were mixed and then put into a biaxial extruder (inner diameter: 58 mm, L/D=56). After the resulting product was discharged from the biaxial extruder into a T-die with a width of 300 mm at a screw rotation speed of 40 rpm and 200 °C and then passed through a casting roll at a temperature of 40 °C, a base sheet having a thickness of 800 $\mu$m was manufactured.

The base sheet was stretched 8 times in the machine direction (MD) by a roll stretching machine at 110 °C and stretched 9 times in the transverse direction (TD) by a tenter stretching machine at 125 °C, thereby manufacturing a film. The film was immersed in a dichloromethane leaching tank at 25 °C, the paraffin oil was extracted and removed for 1 minute and removed, and then dried at 50 °C for 5 minutes. The film was heat-set in a state of 25% relaxation in the transverse direction (TD) at 140 °C, thereby manufacturing a porous separator.

Example 1-2

A porous separator was manufactured in the same manner as in Example 1-1, except that the input amounts of PE1 and EVA were changed to 31 parts by weight and 1 part by weight, respectively.

Example 1-3

A porous separator was manufactured in the same manner as in Example 1-1, except that the input amounts of PE1 and EVA were changed to 30.4 parts by weight and 1.6 parts by weight, respectively.

Example 1-4

A porous separator was manufactured in the same manner as in Example 1-1, except that the input amounts of PE1 and EVA were changed to 30 parts by weight and 2 parts by weight, respectively.

Comparative Example 1-1

A porous separator was manufactured in the same manner as in Example 1-1, except that the input amount of PE1 was changed to 32 parts by weight, and EVA was not input.

Comparative Example 1-2

A porous separator was manufactured in the same manner as in Example 1-1, except that the input amounts of PE1 and EVA were changed to 29.8 parts by weight and 2.2 parts by weight, respectively.

The weight average molecular weight of polyethylene constituting each of the separators according to Examples and Comparative Examples, and the content of ethylene vinyl acetate (the content of EVA and the content of EVA among EP1) in each separator are shown in Table 1 below.

[Table 1]

| Classification | PE1 Weight average molecular weight of (Mw, A) | EVA content (wt%, B) | B/A (*10$^{-5}$) |
|---|---|---|---|
| Example 1-1 | 600,000 | 1.6 | 0.26 |

(continued)

| Classification | PE1 Weight average molecular weight of (Mw, A) | EVA content (wt%, B) | B/A (*10$^{-5}$) |
|---|---|---|---|
| Example 1-2 | 600,000 | 3.1 | 0.52 |
| Example 1-3 | 600,000 | 5.0 | 0.83 |
| Example 1-4 | 600,000 | 6.3 | 1.04 |
| Comparative Example 1-1 | 600,000 | 0 | 0.00 |
| Comparative Example 1-2 | 600,000 | 6.9 | 1.15 |

Experimental Example 1

Electrolyte impregnability of the separators manufactured in Examples and Comparative Examples was measured by the following method. As an electrolyte, a mixed electrolyte (EC : DEC : DMC = 2 : 2 : 1(v/v)) of ethylene carbonate (EC), diethyl carbonate (DEC), and dimethyl carbonate (DMC) in which the concentration of LiPF6 was 1.5M and the content of vinylene carbonate (VC) was 1.5 wt% was used, and the size (MD1, TD1) of droplets immediately after adding 2 $\mu$L of the mixed electrolyte on the surface of the separator and the size (MD2, TD2) of droplets spread after 5 minutes had elapsed were measured along a machine direction (MD) and a transverse direction (TD). In addition, the number (ea/m$^2$) of non-uniform microdots (surface defects), which have a significant difference from the surrounding brightness on the surface of the separator and have a size of 2 mm or more, was measured with the naked eye. The results are shown in Table 2 below.

[Table 2]

| Classification | MD1 (mm) | TD1 (mm) | MD2 (mm) | TD2 (mm) | MD change rate (%) | TD change rate (%) | Surface defects (number) |
|---|---|---|---|---|---|---|---|
| Example 1-1 | 3.28 | 1.86 | 4.02 | 2.31 | 22.6 | 24.2 | 2 |
| Example 1-2 | 3.28 | 1.86 | 4.16 | 2.35 | 26.8 | 26.3 | 5 |
| Example 1-3 | 3.28 | 1.86 | 4.2 | 2.38 | 28.0 | 28.0 | 7 |
| Example 1-4 | 3.28 | 1.86 | 3.92 | 2.21 | 19.5 | 18.8 | 8 |
| Comparative Example 1-1 | 3.28 | 1.86 | 3.48 | 1.96 | 6.1 | 5.4 | 1 |
| Comparative Example 1-2 | 3.28 | 1.86 | 3.77 | 2.12 | 14.9 | 14.0 | 15 |

Example 2-1

27.5 parts by weight of polyethylene (PE2, VH100U, KPIC) having a weight average molecular weight (Mw) of 1,000,000, 0.5 parts by weight of ethylene vinyl acetate (EVA, HTC) in which the content of vinyl acetate was 28 wt%, and 72 parts by weight of paraffin oil having a kinematic viscosity at 40 °C of 70 cSt were mixed and input to a biaxial extruder (internal diameter: 58mm, L/D=56). After the resulting product was discharged from the biaxial extruder into a T-die with a width of 300 mm at a screw rotation speed of 40 rpm and 200 °C and then passed through a casting roll at a temperature of 40 °C, a base sheet having a thickness of 800 $\mu$m was manufactured.

The base sheet was stretched 8 times in the machine direction (MD) by a roll stretching machine at 110 °C and stretched 9 times in the transverse direction (TD) by a tenter stretching machine at 125 °C, thereby manufacturing a film. The film was immersed in a dichloromethane leaching tank at 25 °C, the paraffin oil was extracted and removed for 1 minute and removed, and then dried at 50 °C for 5 minutes. The film was heat-set in a state of 15% relaxation in the transverse direction (TD) at 135 °C, thereby manufacturing a porous separator.

Example 2-2

A porous separator was manufactured in the same manner as in Example 2-1, except that the input amounts of PE2 and EVA were changed to 27 parts by weight and 1 part by weight, respectively.

Example 2-3

A porous separator was manufactured in the same manner as in Example 2-1, except that the input amounts of PE2 and EVA were changed to 26.4 parts by weight and 1.6 parts by weight, respectively.

Example 2-4

A porous separator was manufactured in the same manner as in Example 2-1, except that the input amounts of PE2 and EVA were changed to 26 parts by weight and 2 parts by weight, respectively.

Comparative Example 2-1

A porous separator was manufactured in the same manner as in Example 2-1, except that the input amount of PE2 was changed to 28 parts by weight, and EVA was not input.

Comparative Example 2-2

A porous separator was manufactured in the same manner as in Example 2-1, except that the input amounts of PE2 and EVA were changed to 25.8 parts by weight and 2.2 parts by weight, respectively.

The weight average molecular weight of polyethylene constituting each of the separators according to Examples and Comparative Examples and the content of ethylene vinyl acetate (the content of EVA and the content of EVA among EP2) in each separator are shown in Table 3 below.

[Table 3]

| Classification | Weight average molecular weight of PE2 (Mw, A) | EVA content (wt%, B) | B/A (*10$^{-5}$) |
|---|---|---|---|
| Example 2-1 | 1,000,000 | 1.8 | 0.18 |
| Example 2-2 | 1,000,000 | 3.6 | 0.36 |
| Example 2-3 | 1,000,000 | 5.7 | 0.57 |
| Example 2-4 | 1,000,000 | 7.1 | 0.71 |
| Comparative Example 2-1 | 1,000,000 | 0 | 0.00 |
| Comparative Example 2-2 | 1,000,000 | 7.9 | 0.79 |

Experimental Example 2

The electrolyte impregnability and the number of surface defects of each of the separators manufactured in Examples and Comparative Examples were measured in the same manner as in Experimental Example 1. The results are shown in Table 4 below.

[Table 4]

| Classification | MD1 (mm) | TD1 (mm) | MD2 (mm) | TD2 (mm) | MD change rate (%) | TD change rate (%) | Surface defects (number) |
|---|---|---|---|---|---|---|---|
| Example 2-1 | 3.28 | 1.86 | 3.97 | 2.24 | 21.0 | 20.4 | 3 |
| Example 2-2 | 3.28 | 1.86 | 4.04 | 2.27 | 23.2 | 22.0 | 6 |
| Example 2-3 | 3.28 | 1.86 | 4.72 | 2.34 | 43.9 | 25.8 | 9 |
| Example 2-4 | 3.28 | 1.86 | 3.9 | 2.15 | 18.9 | 15.6 | 10 |
| Comparative Example 2-1 | 3.28 | 1.86 | 3.68 | 2.13 | 12.2 | 14.5 | 2 |
| Comparative Example 2-2 | 3.28 | 1.86 | 3.73 | 1.98 | 13.7 | 15.1 | 19 |

**EP 4 410 410 A1**

It should be understood by those of ordinary skill in the art that the above description of the present invention is exemplary, and the exemplary embodiments disclosed herein can be easily modified into other specific forms without departing from the technical spirit or essential features of the present invention. Therefore, the exemplary embodiments described above should be interpreted as illustrative in all aspects and not restrictive. For example, each component described as a single type may be implemented in a distributed manner, and components described as being distributed may also be implemented in combined form.

The scope of the present invention is defined by the appended claims and encompasses all modifications and alterations derived from meanings, the scope and equivalents of the appended claims.

**Claims**

1.  A separator which is formed of a porous film that has a hydrophobic region containing a polyolefin and a hydrophilic region containing a hydrophilic polymer dispersed in the hydrophobic region, and
    the content of the hydrophilic region in the porous film is 0.1 to 7.5 wt%.

2.  The separator of claim 1, wherein the polyolefin has a weight average molecular weight of 200,000 to 800,000.

3.  The separator of claim 2, wherein the ratio of the content of the hydrophilic region to the weight average molecular weight of the polyolefin is $0.1 * 10^{-5}$ to $1.1 * 10^{-5}$.

4.  The separator of claim 1, wherein the polyolefin has a weight average molecular weight of 900,000 to 2,000,000.

5.  The separator of claim 4, wherein the ratio of the content of the hydrophilic region to the weight average molecular weight of the polyolefin is $0.1* 10^{-5}$ to $0.75* 10^{-5}$.

6.  The separator of claim 1, wherein the polyolefin includes one selected from the group consisting of polyethylene, polypropylene, polybutylene, polymethylpentene, and a combination of two or more thereof.

7.  The separator of claim 1, wherein the hydrophilic polymer is one selected from the group consisting of ethylene vinyl acetate, ethylene vinyl alcohol, polyvinyl alcohol, polyacrylic acid, a polyoxyethylene-polyoxypropylene block copolymer, polyethylene glycol, polyethylene oxide, polyvinyl pyrrolidone, polyvinyl acetal, polyvinyl butyral, a cellulose derivative, glycerol, and a combination of two or more thereof.

8.  The separator of claim 1, wherein, from immediately after the addition of droplets of an electrolyte on the surface of the separator until 5 minutes have elapsed, the rate of change in machine direction (MD) length is 15 to 50%, and the rate of change in transverse direction (TD) length is 15 to 40%.

9.  The separator of claim 1, wherein the number of surface detects that are present on the surface of the separator, have a brightness, which differs from the surroundings, and have a size of 2 mm or more is $10/m^2$ or less.

10. A method of manufacturing a separator according to any one of claims 1 to 9, comprising:

    (a) inputting a composition including a polyolefin, a hydrophilic polymer, and a pore-forming agent to an extruder and forming a base sheet;
    (b) manufacturing a base film by stretching the base sheet and then extracting the pore-forming agent; and
    (c) heat-setting the base film.

# INTERNATIONAL SEARCH REPORT

| International application No. |
| --- |
| **PCT/KR2022/010884** |

**A. CLASSIFICATION OF SUBJECT MATTER**

**B01D 67/00**(2006.01)i; **B01D 71/26**(2006.01)i; **H01M 50/403**(2021.01)i; **H01M 50/417**(2021.01)i

According to International Patent Classification (IPC) or to both national classification and IPC

**B. FIELDS SEARCHED**

Minimum documentation searched (classification system followed by classification symbols)

B01D 67/00(2006.01); B29C 48/00(2019.01); B29C 48/08(2019.01); B29C 48/285(2019.01); C08J 5/22(2006.01); H01G 11/52(2013.01); H01M 2/16(2006.01); H01M 2/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 소수성(hydrophobic), 친수성(hydrophilic), 폴리올레핀 (polyolefin), 다공성 필름(porous film)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2020-0085406 A (LG CHEM, LTD.) 15 July 2020 (2020-07-15)<br>　　See claim 1; and paragraphs [0022], [0058] and [0114]-[0118]. | 1-10 |
| A | KR 10-2020-0039060 A (W-SCOPE KOREA CO., LTD.) 16 April 2020 (2020-04-16)<br>　　See claims 1-17. | 1-10 |
| A | KR 10-1094267 B1 (KOREA INSTITUTE OF INDUSTRIAL TECHNOLOGY) 20 December 2011 (2011-12-20)<br>　　See entire document. | 1-10 |
| A | KR 10-2121293 B1 (ASAHI KASEI KABUSHIKI KAISHA) 10 June 2020 (2020-06-10)<br>　　See entire document. | 1-10 |
| A | JP 2003-132870 A (TOYOBO CO., LTD.) 09 May 2003 (2003-05-09)<br>　　See entire document. | 1-10 |

☐ Further documents are listed in the continuation of Box C.　　☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 October 2022** | **27 October 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2022/010884**

| Patent document cited in search report | | | Publication date (day/month/year) | Patent family member(s) | | | Publication date (day/month/year) |
|---|---|---|---|---|---|---|---|
| KR | 10-2020-0085406 | A | 15 July 2020 | None | | | |
| KR | 10-2020-0039060 | A | 16 April 2020 | KR | 10-2120667 | B1 | 10 June 2020 |
| KR | 10-1094267 | B1 | 20 December 2011 | KR | 10-2011-0026186 | A | 15 March 2011 |
| KR | 10-2121293 | B1 | 10 June 2020 | CN | 110352514 | A | 18 October 2019 |
| | | | | EP | 3719865 | A1 | 07 October 2020 |
| | | | | EP | 3719865 | A4 | 13 January 2021 |
| | | | | JP | 2020-035762 | A | 05 March 2020 |
| | | | | JP | 6634543 | B2 | 22 January 2020 |
| | | | | JP | 6811300 | B2 | 13 January 2021 |
| | | | | KR | 10-2019-0112064 | A | 02 October 2019 |
| | | | | US | 2020-0067055 | A1 | 27 February 2020 |
| | | | | WO | 2019-107119 | A1 | 06 June 2019 |
| JP | 2003-132870 | A | 09 May 2003 | None | | | |

Form PCT/ISA/210 (patent family annex) (July 2022)